# EUROPEAN PATENT APPLICATION

(11) **EP 4 537 953 A1**
(43) Date of publication of application: **16.04.2025**
(21) Application number: 23202580.9
(22) Date of filing: 10.10.2023
(51) Int. Cl.: B21J 15/32, B23K 9/20, B23P 19/00, B25B 23/04, B65G 51/02

(54) **METHOD FOR FEEDING JOINING ELEMENTS AND JOINING APPARATUS**

(71) Applicant: Newfrey LLC, New Britain, CT 06053 (US)
(72) Inventor: Spieß, Manuel, 35394 Gießen (DE)
(74) Representative: SBD IPAdmin

(57) **Abstract**

Method for feeding joining elements into a holding arrangement of a joining apparatus, with the following steps:
- providing a joining apparatus (10) comprising:
- a supply unit (S),
- a joining head (12) with the holding arrangement (16),
- a compressed air source (30) configured to supply compressed air, and
- a feeding hose (24) through which the joining elements are conveyed individually from the supply unit to the holding arrangement of the joining head via compressed air supplied by the compressed air source in the feeding hose,

- providing at least one joining element (18) in the supply unit (S),
- feeding one joining element (18) from the supply unit to the joining head (12) through the feeding hose,
wherein
a control unit (32) commands the compressed air source (30) to be successively turned on and off during the convoy of the fastening element (18) in the feeding hose (24) from the supply unit (S) to the joining head (12) such that a pulsed air flow is supplied in the feeding hose (24).

## Description

The present invention relates to a method for feeding joining elements into a holding arrangement of a joining apparatus and to a joining apparatus for securing joining elements to a component.

In the present context, the terms "fastening" or "joining" are intended to refer to all methods for attaching elements to components, in particular attaching metal or plastic elements to metal or plastic components, for example by adhesive bonding, screwing, by forming, such as riveting, self-piercing riveting, blind riveting of rivets or nuts, clinch riveting, or by the union of materials, such as welding, including short-cycle arc welding or drawn-arc welding. Short-cycle arc welding is frequently referred to as stud welding, even though studs are not the only parts welded in this manner.

Self-piercing rivets and associated tools or apparatus for fastening two or more pieces of material with respect to one another are generally well-known in the automotive industry. Self-piercing rivets have typically been used in non-critical connections attaching two or more pieces of material with respect to one another, for instance to assemble an automotive body at a framing station using self-piercing rivets.

Stud welding is used primarily, but not exclusively, in automotive production. In this context, metal elements, such as metal studs with and without threads, eyes, nuts, etc., are welded onto the sheet metal or workpiece of a vehicle body. The metal elements then serve as anchors or mounting elements, for example for attaching passenger compartment fittings, lines, wiring and the like, to the body metal. The metal elements may be welding studs that have a shank, and a head somewhat larger in diameter than the stud shank. The head is welded to the workpiece.

Such joining or fastening apparatus are commonly attached to a movable frame, in particular to a robot and comprise a holding arrangement for holding a joining element destined to be joined to a workpiece, a joining drive element to move the holding arrangement along a joining direction for joining the joining elements to the workpiece and a feeder for feeding the joining elements (also called fasteners).

Once a joining element is arranged in the holding arrangement, a conventional fastening or joining method can be carried out. For example, a conventional stud welding process, preferably in the drawn arc method, can be carried out as follow. The joining element is first placed on the workpiece by means of the joining drive element. Then a pre-conduction electric current is switched on, which flows through the joining element and the workpiece. Next, the joining element (or stud) is raised with respect to the component by means of the fastening drive device (linear motor). An electric arc forms. The system then switches to the welding current. The end faces of the joining element and workpiece (or component) opposite one another begin to melt as a result of the high welding current. Then the joining element is lowered onto the workpiece again so that the two melts combine. The welding current is switched off upon contact with the component and short-circuiting of the arc, or shortly beforehand. All the molten material solidifies, and the weld connection is established.

The joining elements needs to be supplied to a joining head, and more particularly to the holding arrangement of the joining head. It is known to feed joining elements in an automated manner into a joining head. In this connection, individually separated joining elements such as studs are blown through a feeding tube or feeding hose by means of compressed air toward the joining head (and the holding arrangement).

The disadvantage of many compressed air applications is that compressed air is inefficient as an energy source and losses occur. Losses arise for instance as compression losses, leakage or network losses.

Various solutions have been proposed to remedy these problems.

Document DE102022133843A1 for instance discloses a feeding device for joining elements that can be moved to a connection point of a joining apparatus. The feeding device is designed as a separately positionable peripheral unit for supplying the joining device with joining elements. The connection point is designed with a tube that can be connected to the feeding device, such that the joining elements can be transferred in the tube from the connection point to the joining head. The joining elements are transferred by means of a gas flow. According to the disclosure, the feeding device has a gas flow generation device such that, due to the gas flow, the elements can be transferred from the connection point due to the gas flow provided by the gas flow generation device. The feeding device is provided in an installation space, wherein the gas flow generation device is designed to take in air from the environment of the feeding device in the installation space of the feeding device in order to provide the gas flow. Such arrangement is complicated to implement.

Document US2013272804 also discloses a device for supplying joining elements. More particularly, the device includes at least two provision channels configured to secure elements of different types, and by which the securing elements are conveyed into a common supply unit, and a processing channel, through which the securing elements are conveyed individually from the supply unit to the processing unit. The device has joining elements configured to be acted on with variable compressed air in a common supply unit, the pressure of the compressed air being adjustable in accordance with the type of the respective joining element. This arrangement is also complicated to implement and does not significantly reduce losses or the volume of air required.

It is thus an object of the present invention to provide a method for feeding joining elements into a holding arrangement of a joining apparatus which can be easily implemented, which reduces the air consumption without significant cycle time extension and with a reliable feeding stroke.

Accordingly, the present invention provides a method according to claim 1. More particularly the present invention is directed to a method for feeding joining elements into a holding arrangement of a joining apparatus with the following steps:
- providing a joining apparatus comprising:
   - a supply unit,
   - a joining head with the holding arrangement,
   - a compressed air source configured to supply compressed air, and
   - a feeding hose through which the joining elements are conveyed individually from the supply unit to the holding arrangement of the joining head via compressed air supplied by the compressed air source in the feeding hose,
- providing at least one joining element in the supply unit,
- feeding one joining element from the supply unit to the joining head through the feeding hose,

Wherein
a control unit commands the compressed air source to be successively turned on and off during the convoy of the joining element in the feeding hose from the supply unit to the joining head such that a pulsed air flow is supplied in the feeding hose.

By turning off and on the compressed air within the feeding hose, a significant reduction of the compressed air consumption is realized without impacting substantially the cycle time or the joining element delivery. More particularly, up to 30% of air saving is realized.

In an embodiment, during the feeding step of the joining element from the supply unit to the holding arrangement, the compressed air source is turned off at least once, and in particular at least twice and more particularly at least three times. This increases the reduction of air consumption.

In an embodiment, the compressed air source is switched off every time during at least 50 milliseconds. In an embodiment, the compressed air source remained turned on every time at least 50 milliseconds. This ensures the air saving without compromising the joining element feeding stroke.

In an embodiment, the feeding step of the joining element from the supply unit to the holding arrangement extends over a feeding time t, and wherein the compressed air source is switched off at least 10% of the entire feeding time.

In an embodiment, the compressed air source, when turned on, delivered a constant pre-determined compressed air flow. Thus, there is only an on and off mode, and not a variable flow. For instance, the compressed air source delivers one constant pre-determined compressed air flow level.

In an alternative embodiment, the compressed air source delivers more than one, for example three constant predetermined air flow levels.

In an embodiment, the compressed air source is turned off before the arrival of the stud in the vicinity of the holding arrangement. This allows a soft impact. More particularly, the soft impact avoids the joining element, due to high kinetic energy, to have a "hard" impact and increase wear on component or even fall out of the holding arrangement.

In an embodiment, the compressed air source provides compressed air according to a predetermined compressed-air profile, and wherein the pre-determined compressed air profile comprises a departure phase, a flight phase and an arrival phase, and wherein the compressed air source profile differs during the departure phase and the flight phase. More particularly, the departure phase corresponds to the acceleration phase of the joining element. It begins when the compressed air flow begins to be supplied in the feeding hose and ends for instance 300 milliseconds after or 200 milliseconds after a possible departure sensor detects the presence of the joining element. The arrival phase corresponds to the arrival of the joining element in the holding arrangement or about 300 milliseconds before the end of the feeding step. The flight phase corresponds to the phase between the departure phase and the arrival phase.

In an embodiment, the compressed air source is turned off at least once during the flight phase. In another embodiment, the compressed air source is turned off at least twice during the flight phase. Thus, the delivery of the joining element is not impacted and the reduction of air consumption is significant.

In an embodiment, the compressed air source is turned off three to four times during the flight phase.

In an embodiment, the compressed air source is turned off at least once during the departure phase.

In an embodiment, the compressed air source is switched off at least once during the arrival phase.

The present invention is also directed to a joining apparatus for securing a joining element to a component comprising:
- a supply unit,
- a joining head with a holding arrangement,
- a compressed air source configured to supply compressed air, and

- a feeding hose through which the joining elements are conveyed individually from the supply unit to the holding arrangement of the joining head via compressed air supplied by the compressed air source in the feeding hose, wherein a controller commands the compressed air source to be successively turned on and off during the convoy of the joining element in the feeding hose from the supply unit to the holding arrangement such that a pulsed air flow is supplied in the feeding hose.

The presence of the controller allows an easy implementation of the on/off function of the compressed air source and the compressed air flow within the feeding hose.

The invention and its advantages will be better understood from the reading of the following description, given by way of example only and with reference to the accompanying drawings, of which:
Fig. 1 shows a schematic perspective view of a joining apparatus, notably a stud welding system comprising a joining head with a holding arrangement, a supply unit and a feeding hose for feeding joining elements destined to be joined to a workpiece;
Fig. 2 shows a first embodiment of a compressed air profile applied by a control unit for the feeding of the joining elements;
Fig. 3 shows a second embodiment of a compressed air profile applied by a control unit for the feeding of the joining elements;
Fig. 4 shows a third embodiment of a compressed air profile applied by a control unit for the feeding of the joining elements.

The embodiments of the disclosure will be best understood by reference to the drawings, wherein the same reference signs designate identical or similar elements.

It will be readily understood that the components of the disclosed embodiments, as generally described and illustrated in the figures herein, could be arranged and designed in a wide variety of different configurations. Thus, the following detailed description of the embodiments of the systems and methods of the disclosure is not intended to limit the scope of the disclosure, as claimed, but is merely representative of possible embodiments of the disclosure. In addition, the steps of a method do not necessarily need to be executed in any specific order, or even sequentially, nor need the steps be executed only once, unless otherwise specified.

In some cases, well-known features, structures, or operations are not shown or described in detail. Furthermore, the described features, structures, or operations may be combined in any suitable manner in one or more embodiments. It will also be readily understood that the components of the embodiments, as generally described and illustrated in the figures herein, could be arranged and designed in a wide variety of different configurations.

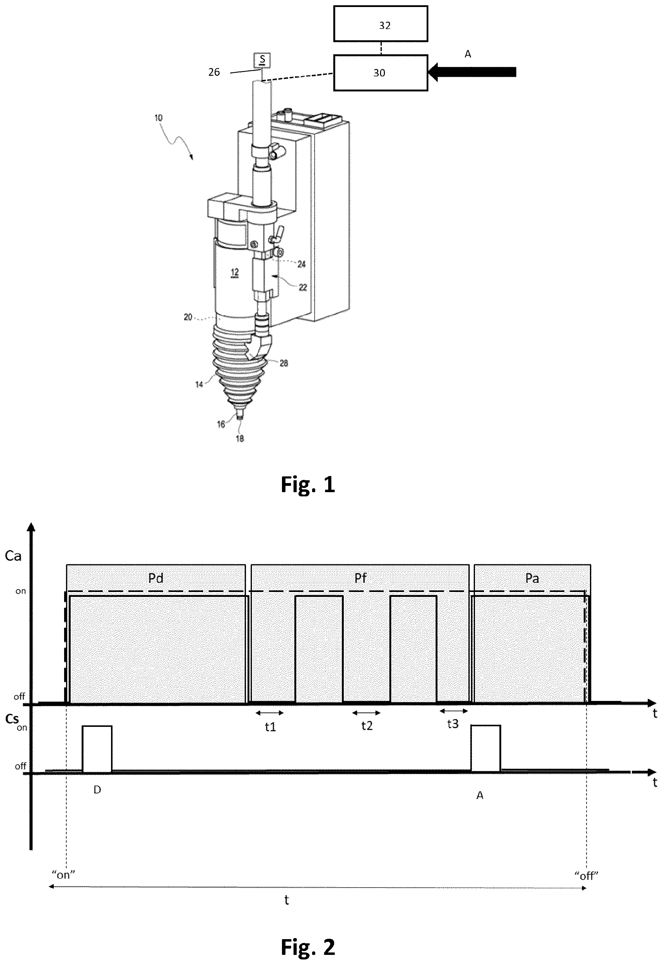

Fig. 1 shows a joining apparatus 10 according to the invention. The joining apparatus is adapted to be driven by a robot (not represented) with a stationary base from which two arms extend, articulately connected to each other. A flange may be provided at an end of the arm, and the joining apparatus 10 can be attached to said flange. The joining apparatus 10 comprises a joining head 12. The joining head 12 is provided with a nose 14 with a holding arrangement 16. The holding arrangement 16 is a receiving element for receiving joining elements 18 destined to be joined to the component or workpiece. The joining element is for example a stud, such as a weld stud or a glue stud. In other embodiments, the joining element can be a rivet, a self-piercing rivet, a self-coring rivet, a self-flowing rivet, a blind rivet, a nut, a blind nut, a screw.... etc. The holding arrangement 16 is for example a holding element for holding the joining element (or fastener) before and/or during the joining step, notably if the joining element is a weld stud. The holding arrangement 16 may also be a receiver, notably if the joining element is a rivet. Although the joining apparatus 10 may be employed for numerous kinds of joining as a matter of design, the joining apparatus 10 illustrated in Fig. 1 serves more particularly to weld a joining element, in particular a welding stud, to a workpiece, for example a metal sheet. A conformation of the joining system as a bolt-welding system, or short-time arc-welding system with lift ignition, is especially preferred, without loss of generality.

The joining apparatus 10 further comprises for instance a joining drive element 20. The joining drive element 20 is adapted to move the holding arrangement 16 along a joining direction for joining the joining element to the workpiece.

A feeder 22 is also provided. The feeder 22 comprises a feeding hose 24 (also called feeding tube) adapted to receive joining elements from a supply unit S (or magazine) and into which the joining elements are stored to the nose by compressed air. The feeding hose 24 can eventually have a portion integrated to the head or the nose and a portion extending outside the head or the nose. More particularly, the feeding tube correspond to the channel in which the joining element is driven with compressed air from the supply unit S to the holding arrangement 16 or a final position in which the joining drive element is used for a joining process.

The feeding hose 24 receives isolated joining elements 18 and each joining element 18 is driven by compressed air from the supply unit S to the holding arrangement 16 of the joining head 12, as illustrated in Fig. 1 . The feeding hose 24 extends between a first end 26 and a second end 28. In a known manner, the feeding hose 24 may extend over several meters. At the second end 28, the feeding hose 24 communicates with the holding arrangement 16 for the passage of the joining element 18 from the feeding tube 24 to the holding arrangement 16. Compressed air is provided within the feeding hose 24 by a compressed air source 30. The compressed air source delivers the compressed air flow into the feeder hose 24. The compressed air source 30 comprises for example one or more valves. The compressed air source 30 comprises an inlet for the supply of air (see arrow A in Fig. 1) coming from an air source and one outlet connected to the feeding hose 24. The valve can be a magnetic valve. A control unit 32 commands the compressed air source. A non-transitory computer readable storage medium having stored thereon computer readable instructions can be provided. The non-transitory computer readable storage medium, when executed at a computer system, may cause a computer system and the control unit to perform the following method steps.

Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, control unit or computer system may be any kind of device, machine or dedicated circuit, or collection or portion thereof, with processing capability such that it can execute instructions. A processor may be any kind of general purpose or dedicated processor, such as a CPU, GPU, System-on-chip, state machine, an application-specific integrated circuit (ASIC), a programmable logic array, a field-programmable gate array (FPGA), or the like. A computer or computer system may comprise one or more processors.

The control unit commands or controls the compressed air source. For instance, the control unit commands the supply or not of compressed air in the feeding hose 24. For instance, during a feeding step of the joining element from the supply unit S to the holding arrangement 16, the compressed air source 30 provides compressed air for the joining element to be driven up to the holding arrangement 16. The control unit 32 commands the compressed air source 30 to be successively turned on and off during the convoy of the joining element 18 in the feeding hose from the supply unit to the joining head such that a pulsed air flow is supplied in the feeding hose. The supply of pulsed air into the feeding hose allows a substantial compressed air consumption reduction.

For instance, the compressed air source delivers a constant pre-determined compressed air flow.

During the feeding process, the joining element is conveyed through the feeding tube and three phases are identified. The first phase corresponds to the departure phase. The is the departure phase of the joining element from the supply unit. A departure sensor may be provided to detect the correct departure of one joining element within the feeding hose. The departure phase for instance begins before the recognition of the stud departure by the sensor. The departure phase begins as soon as an order to feed a new joining element is delivered and as soon as compressed air is supplied within the feeder and the feeding hose 24 to drive said joining element. Following the departure phase, when the joining element is driven within the feeding hose, a flight phase occurs. Following the flight phase is the arrival phase. The arrival phase begins for example as soon as an arrival sensor detects the presence of the joining element inside the or in the vicinity of the holding arrangement 16. More particularly, as described above, the departure phase corresponds to the acceleration phase of the joining element. It begins when the compressed air flow begins to be supplied in the feeding hose and ends for instance 300 milliseconds after the start of the air supply or 200 milliseconds after a possible departure sensor detects the presence of the joining element. The arrival phase corresponds to the arrival of the joining element in the holding arrangement and begins about 300 milliseconds before the end of the feeding step. The flight phase corresponds to the phase between the departure phase and the arrival phase.

The feeding step of the joining element from the supply unit to the holding arrangement extends over a feeding time t. The total feeding time t is for example between 300 milliseconds and 5000 milliseconds. Typically, the total feeding time t is of 1.2 bis 3.7 seconds, in particular of 1.5 bis 2 seconds. These values are only an order of magnitude and may differ depending on the joining environment, the joining technique, ... During the feeding time, the control unit 32 commands a stop of the compressed air source delivery during a total time ttoff which corresponds to at least 10% of the entire feeding time t. In other words, the compressed air source is switched off at least 10% of the entire feeding time.

A particular or predetermined compressed air profile may be stored in a processor or in the control unit such that a predetermined pulsed air profile is delivered into the feeding hose. The particular compressed air profile is predetermined and ensures the correct delivery of the joining element up to the holding arrangement. Besides, the predetermined compressed air profile avoids a substantial increase of the feeding cycle time. For instance, different compressed air flow profiles are stored and the control unit applies the air flow profile which corresponds to a particular joining element or joining process. In another embodiment, an adaptive feeding process may be implemented and the compressed air profile is adapted to different joining parameters.

Fig. 2 shows a first embodiment of a compressed air profile allowing a reduction of air consumption. Fig. 2 shows two curves.

The first curve Ca corresponds to the compressed air source use versus time. The dotted line is the compressed air source during a prior art process. In the prior art, the compressed air source stayed "on" during the entire feeding step. The plain line corresponds to the feeding process according to the present first embodiment.

The second curve Cs corresponds to sensor detections of the joining element as a function of time. For instance, two sensors may be provided: one in the vicinity of the first end 26 for detecting a joining element departure and one in the vicinity of the second end for detecting a joining element arrival. The second curve Cs represents the joining element detection within the feeding hose 24 at the departure and at the arrival in relation to time.

As depicted in Fig. 2, during the departure phase Pd, the compressed air source 30 is "on" and a constant compressed air flow is delivered in the feeding hose 24. As soon as the flight phase is reached, the compressed air source is turned "off" by the control unit and as visible, the joining element continue its trajectory within the feeding hose 24. The compressed air may be switched off during a period of time t1. T1 might be of about 100 milliseconds, and more generally is of at least 50 milliseconds. The compressed air is for instance turned off three times during the flight phase. The first time is at the beginning of the flight phase, the third time is at the end of the flight phase and the second time is therebetween. The compressed air source can be switched off for a predetermined stop time t1, t2, t3 which is the same each time, or which is different. For example, during the first and second stopping times (or off-times), the compressed air source is stopped for a predetermined stopping time t1, t2 which is greater than that of the third time t3. During the arrival phase Pa, the compressed air remains turned "on" and delivers a constant compressed air flow. Therefore, the pulsed air is provided during the flight phase.

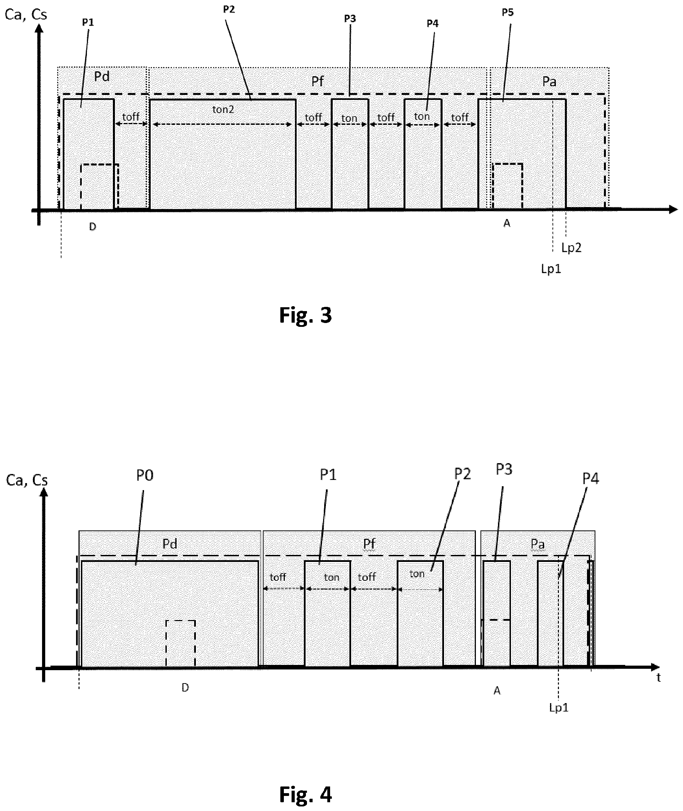

In another embodiment, as depicted in Fig. 3, the predetermined compressed air profile curve Ca still comprises the departure phase, the flight phase and the arrival phase. As visible in Fig. 3, the large dotted line is the compressed air source during a prior art process, with the compressed air source 30 being on during the entire feeding process. The plain line is the compressed air profile curve Ca according to this second embodiment. The small dotted line corresponds to the joining element departure and arrival curve Cs. In this second embodiment, five pulses P1, P2, P3, P4, P5 are provided. The pulses P1, P2, P3, P4 and P5 corresponds to the compressed air source being on and delivering compressed air to the feeding hose 24. Between the pulses, the compressed air source is switched off. During the departure phase, a joining element departure sensor may detect the presence D of a joining element. During the departure phase Pd, a first pulse P1 is provided. The first pulse is a "kick pulse" and initiates the motion of the joining element. As seen, the departure sensor will detect the presence of a joining element in the feeding hose about 40 to 80 milliseconds after the supply of the compressed air. The first pulse P1 may last for a predetermined time.

For example, the first pule P1 lasts for between 100 and 300 milliseconds and then the compressed air source is switched off by the control unit. The switched-off time toff may be of about 100 milliseconds and is at least of 50 milliseconds. The compressed air source is first switched off during the departure phase Pd.

During the flight mode of the second embodiment, a second pulse, corresponding to an acceleration pulse is initiated. The compressed air source is switched on at the beginning of the flight phase. The second pulse P2 is for instance longer than the first pulse P1. The second pulse may last for instance during a predetermined time ton2 of about 400 milliseconds. Following the second pulse P2, the compressed air source is switched off again during a switched off time toff which can be of about 100 milliseconds. A third and a fourth pulse P3 and P4 are then initiated. The third and fourth pulses may be identical and last during a predetermined time ton, which can be of 100 milliseconds, for example. Between the third and fourth pulses, the compressed air source is switched off for a time toff which can be identical to the previous switched off times. After the fourth pulse P4, the compressed air source 30 is also switched off, for a time toff which can be identical or different than the other switched-off times toff. A fifth pulse P5 is then initiated. The fifth pulse P5 may begin shortly before the arrival phase Pa or directly at the beginning of the arrival phase Pa. As seen, an arrival sensor may detect the presence of the joining element at the end of the feeding hose. The joining element may be pushed by a load pin inside the holding arrangement 16. After the arrival of the joining element, the load pin moves toward the joining element Lp1 to ensure its correct arrangement within the holding arrangement. The load pin then moves back Lp2 and the compressed air source may be switched off. In an alternative, the compressed air source may be switched off directly when the load pin moves toward the joining element Lp1.

Fig. 4 shows a third embodiment of a compressed air profile according to the disclosure. The large dotted line is the compressed air source curve during a prior art process, with the compressed air source 30 being "on" during the entire feeding process. The plain line is the compressed air profile curve Ca according to this second embodiment. The small dotted line corresponds to the joining element departure and arrival curve Cs. As seen in Fig. 4, during the departure phase, the compressed air source is always switched on. This corresponds to an initial pulse P0. During the flight phase the control unit commands the compressed air source to be successively turned on and off. More particularly, the compressed air source will be switched off at the beginning of the flight phase, then switched on for a first pulse. The compressed air source is switched on for a predetermined time ton before being switched off for another period toff, which can be identical or different to the switched-on time ton. A second pulse P2 is then initiated followed by a switched off period of time toff. The arrival phase begins for instance with a third pulse. The arrival phase also comprises a fourth pulse. The compressed air source is switched off substantially when the load pin moves forward the joining element. The switched-off time during and before the arrival phase will notably allows a soft impact of the joining element within the holding arrangement.

As mentioned above, in the embodiments of Fig. 2, Fig. 3 and Fig. 4, the switched-on times ton may all be different. The same applies mutatis mutandis to the switched-off times toff.

Although specific examples have been illustrated and described herein, a variety of alternate and/or equivalent implementations may be substituted for the specific examples shown and described without departing from the scope of the present disclosure. This application is intended to cover any adaptations or variations of the specific examples discussed herein. More particularly, different compressed air flow profiles may be implemented.

The compressed air source 30 may deliver one constant predetermined air flow level. In an alternative embodiment, the compressed air source delivers more than one, in particular one to three constant predetermined air flow levels.

For instance, with an eight-meter-long feeding hose 24 and a standard joining element, tests have proven a reduction of the air consumption of up to 30% when a pulsed compressed air profile, as described above is used with regard to standard compressed air supply. The air consumption reduction does not impact substantially the cycle time.

## Claims

1. Method for feeding joining elements into a holding arrangement (16) of a joining apparatus (10), with the following steps:
- providing a joining apparatus (10) comprising:
- a supply unit (S),
- a joining head (12) with the holding arrangement (16),
- a compressed air source (30) configured to supply compressed air, and
- a feeding hose (24) through which the joining elements are conveyed individually from the supply unit to the holding arrangement of the joining head via compressed air supplied by the compressed air source in the feeding hose,
- providing at least one joining element (18) in the supply unit,
- feeding one joining element (18) from the supply unit to the joining head through the feeding hose,
**characterized in that**
a control unit (32) commands the compressed air source to be successively turned on and off during the convoy of the joining element in the feeding hose from the supply unit to the joining head such that a pulsed air flow is supplied in the feeding hose (24).

2. Method according to claim 1, wherein during the feeding step of the joining element (18) from the supply unit (S) to the holding arrangement (16), the compressed air source (30) is turned off at least twice.

3. Method according to any of claims 1 to 2, wherein the compressed air source (30) is switched off every time during at least 50 milliseconds.

4. Method according to any of claims 1 to 3, wherein the compressed air source (30) remained turned on every time during at least 50 milliseconds.

5. Method according to any of claims 1 to 4, wherein the feeding step of the joining element (18) from the supply unit to the holding arrangement extends over a feeding time t, and wherein the compressed air source (30) is switched off at least 10% of the entire feeding time.

6. Method according to any of claims 1 to 5, wherein the compressed air source (30), when turned on, delivered a constant pre-determined compressed air flow.

7. Method according to any of claims 1 to 6, wherein the compressed air source (30) delivers at least one and up to three constant predetermined air flow levels.

8. Method according to any of claims 1 to 7, wherein the compressed air source (30) is turned off before the arrival of the stud in the vicinity of the holding arrangement.

9. Method according to any of claims 1 to 8, wherein the compressed air source (30) provides compressed air according to a predetermined compressed-air profile, and wherein the pre-determined compressed air profile comprises a departure phase (Pd), a flight phase (Pf) and an arrival phase (Pa), and wherein the compressed air source profile differs during the departure phase and the flight phase.

10. Method according to claim 9, wherein the compressed air source (30) is turned off at least once during the flight phase, and in particular three to four times during the flight phase.

11. Joining apparatus (10) for securing a joining element to a component comprising:
- a supply unit (S),
- a joining head (12) with a holding arrangement,
- a compressed air source (30) configured to supply compressed air, and
- a feeding hose (24) through which the joining elements are conveyed individually from the supply unit to the holding arrangement of the joining head via compressed air supplied by the compressed air source in the feeding hose,
**Characterized in that**
a control unit (32) commands the compressed air source to be successively turned on and off during the convoy of the joining element in the feeding hose from the supply unit to the holding arrangement such that a pulsed air flow is supplied in the feeding hose.
